(19) Europäisches Patentamt
European Patent Office
Office européen des brevets

(11) Publication number: 0 339 571 B1

(12) EUROPEAN PATENT SPECIFICATION

(45) Date of publication of patent specification: 23.02.94

(51) Int. Cl.⁵: C08F 4/60, C08F 10/02

(21) Application number: 89107468.4

(22) Date of filing: 25.04.89

# (54) Process for preparation of ethylene polymers.

(30) Priority: 26.04.88 JP 105291/88
18.05.88 JP 121389/88

(43) Date of publication of application:
02.11.89 Bulletin 89/44

(45) Publication of the grant of the patent:
23.02.94 Bulletin 94/08

(84) Designated Contracting States:
BE DE GB NL

(56) References cited:
EP-A- 0 260 130
WO-A-87/02991
US-A- 4 659 685

PATENT ABSTRACTS OF JAPAN, vol. 12, no. 70 (C-479)[2917], 4th March 1988; & JP-A-62 207 307 (NIPPON OIL CO., LTD) 11-09-1987

(73) Proprietor: SHOWA DENKO KABUSHIKI KAISHA
10-12, Shiba Daimon 2-chome
Minato-ku
Tokyo(JP)

(72) Inventor: Sasaki, Yasuaki c/o SHOWA DENKI K.K.
Oita Kenkusho
2, Oaza Nakanosu
Oita-shi Oita(JP)

(74) Representative: Strehl Schübel-Hopf Groening & Partner
Maximilianstrasse 54
D-80538 München (DE)

EP 0 339 571 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

The present invention relates to a process for preparing an ethylene polymer by using a novel catalyst system. More particularly, the present invention relates to a process for the preparation of an ethylene polymer having a broad molecular weight distribution suitable for inflation molding or blow molding and also having a high melt tension and a large die swell.

2. Description of the Related Art

An ethylene polymer is generally widely used as a resin material for the production of various molded articles, but the required characteristics differ according to the molding method and intended use. For example, a polymer having a relatively low molecular weight and a narrow molecular weight distribution is suitable for an article to be molded by the injection molding method, but a polymer having a relatively high molecular weight and a broad molecular weight distribution is suitable for an article to be molded by the inflation molding or blow molding method. The molecular weight distribution is related to the surface roughness of a film or blow-formed product, and it is considered that, when the molecular weight distribution is broad, the surface roughness of a molded article is small. Namely, even in the case of a polymer having a high molecular weight, the flowability is good and melt fractures do not occur in the surface of a molded article, and therefore, a product having a high quality can be obtained.

In inflation molding or blow molding, for example, if it is intended to carry out a stable high-speed molding of an inflation film or to maintain the stability of a parison during blow molding, especially to prevent sagging or tearing of a parison for a large vessel, a polymer having a large melt tension must be used.

Various processes for preparing ethylene polymers having a broad molecular weight distribution and a high melt tension have heretofore been proposed, for example, in Japanese Unexamined Patent Publication No. 56-90809, No. 56-90810, No. 59-56406 and No. 60-106806. In Japanese Unexamined Patent Publication No. 56-90809 and No. 56-90810, an improvement of the die swell is obtained, but the improvement is not satisfactory, and moreover, the molecular weight distribution is not sufficiently broadened. In Japanese Unexamined Patent Publication No. 59-56406 and No. 60-106806, the melt tension can be controlled over a broad range, but the broadening of the molecular distribution is relatively insufficient and an improvement is desired in the balance between the melt tension and the molecular weight distribution.

SUMMARY OF THE INVENTION

The primary object of the present invention is to provide a process in which the above-mentioned problems of the conventional techniques are solved and by which an ethylene polymer having a broad molecular weight distribution, a high melt tension, and a large die swell is efficiently prepared.

More specifically, in accordance with the present invention, there is provided a process for the preparation of ethylene polymers, which comprises homopolymerizing ethylene or copolymerizing ethylene with an $\alpha$-olefin having up to 20 carbon atoms in the presence of a catalyst comprising (A) a titanium- or chromium-containing porous inorganic oxide carrier obtained by heating a porous inorganic oxide, on which at least one compound selected from the group consisting of a titanium compound and a chromium compound is supported, at a temperature of 300 to 1,000 °C, (B) a transition metal compound containing a group having a conjugated $\pi$-electron system as a ligand, and (C) an aluminoxane.

A catalyst comprising the components (B) and (C), which constitutes a part of the catalyst of the present invention, has recently been proposed and is disclosed, for example, in Japanese Unexamined Patent Publication No. 58-19309, No. 61-211307 and No. 62-230802, but polymers prepared according to these proposals have a narrow molecular weight distribution. A catalyst comprising the components (B) and (C) and a specific inorganic oxide carrier has been proposed in Japanese Unexamined Patent Publication No. 61-108610, No. 61-276805, No. 61-296008, No. 63-22804, 63-54403 and 63-61010, but the catalyst of this type gives only a polymer having a narrow molecular weight distribution. According to the present invention, by using a carrier obtained by heating a titanium- and/or chromium-containing porous inorganic oxide at a temperature of 300 to 1,000 °C, an ethylene polymer having a broad molecular weight distribution, a high melt tension, and a large die swell can be obtained, and this effect is surprising and

cannot be expected from the conventional techniques.

DESCRIPTION OF THE PREFERRED EMBODIMENTS

The titanium compound used for the production of the carrier in the present invention is a trivalent or tetravalent titanium compound. A typical example of the trivalent titanium compound is titanium trichloride such as titanium trichloride formed by the hydrogen reduction method and a solid solution or composition composed mainly of titanium trichloride and containing another metal, especially $TiCl_3 \cdot \frac{1}{3} AlCl_3$ prepared by the aluminum reduction method. Furthermore, a product obtained by treating titanium trichloride with an alcohol or another electron donor compound can be used.

The following compounds can be mentioned as the tetravalent titanium compound:

(i) Compounds represented by the general formula $Ti(OR^1)_\ell X_{4-\ell}$ in which $R^1$ stands for an aliphatic, alicyclic or aromatic hydrocarbon group having up to 8 carbon atom, X stands for a halogen atom, and $\ell$ is a number of $0 \leq \ell \leq 4$.

As specific examples, there can be mentioned titanium tetrachloride, titanium tetrabromide, methoxytitanium trichloride, ethoxytitanium trichloride, propoxytitanium trichloride, butoxytitanium trichloride, dimethoxytitanium dichloride, dibutoxytitanium dichloride, tributoxytitanium chloride, tetraethoxytitanium, tetraisopropoxytitanium and tetrabutoxytitanium.

(ii) Polytitanate compounds represented by the following general formula:

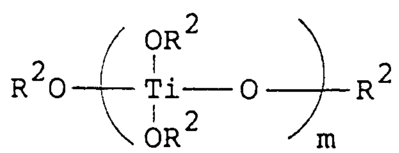

wherein $R^2$ stands for an aliphatic, alicyclic or aromatic hydrocarbon group having up to 8 carbon atoms, and m is an integer of from 2 to 10.

These polytitanates can be obtained by partially, hydrolyzing an alkoxy compound of titanium. As typical instances, there can be mentioned diethoxytitanium dimer, diethoxytitanium trimer, dipropoxytitanium dimer, dipropoxytitanium tetramer, dibutoxytitanium tetramer, and dibutoxytitanium decamer.

(iii) Compounds obtained by treating the above-mentioned compounds (i) and (ii) with an electron donor compound.

The electron donor compound is a compound having at least one polar group, and as typical instances of the electron donor compound, there can be mentioned ether compounds, carboxylic acid compounds, alcohol compounds, and ester compounds.

Among these titanium compounds, a tetraalkoxytitanium is preferred.

As the chromium compound used for the production of the carrier in the present invention, there can be mentioned oxides, halides, oxyhalides, nitrates, sulfates, acetates and oxalates of chromium, and organium chromium compounds. As specific examples, there can be mentioned chromium trioxide, chromyl chloride, chromium nitrate, chromium acetate, ammonium chromate, acetylacetone chromium, and biscyclopentadienyl chromium.

The porous inorganic oxide is an oxide of a metal of the group IIa, IIIa, IVa or IVb of the Periodic Table (old a/b nomenclature according to Chemical Abstracts Service). As specific examples, there can be mentioned silica, alumina, magnesia, zirconia, and mixtures thereof. These oxides have different properties according to the kind and preparation process, but in the present invention, an oxide having a specific surface area of at least 50 $m^2/g$, an average pore diameter of at least 5 nm, and an average particle diameter of not longer than 100 $\mu m$ is preferably used.

As the method of supporting the titanium compound and/or the chromium compound on the porous inorganic oxide, there can be mentioned a method in which the titanium or chromium compound is dissolved in an inert solvent and the inorganic oxide is mixed into the thus-prepared solution to impregnate the inorganic oxide with the solution, a method in which the titanium or chromium compound is brought into contact with the inorganic oxide in the absence of an inert solvent, and a method in which the titanium or chromium compound is dry-mixed with the inorganic oxide by a ball mill or the like. The supporting method is usually carried out at a temperature up to 100 °C, preferably at a temperature of 0 to 40 °C.

When the solvent is used for supporting the titanium compound and/or the chromium compound on the porous inorganic oxide, the solvent is removed by distillation and the porous inorganic oxide having the titanium compound and/or the chromium compound supported thereon is heated at 300 to 1,000 °C to

obtain a carrier. Heating can be performed in the state fluidized by a dry gas, for example, air. Preferably, the titanium compound and/or the chromium compound is used in an amount such that the content of the titanium atom and/or the chromium atom in the obtained carrier is 0.2 to 10% by weight. More preferably, when each of the titanium compound and the chromium compound are used alone, the amounts thereof are such that the contents of the titanium atom and the chromium atom in the carrier are 0.5 to 10 % by weight and 0.2 to 5 % by weight, respectively, based on the weight of the carrier.

The transition metal compound (B) containing a group having a conjugated $\pi$-electron system as a ligand is, for example, a compound represented by the general formula $R^8_p (R^3)_2MR^4R^5$. In this general formula, M stands for titanium, zirconium or hafnium, $R^3$ stands for a cycloalkadienyl group, and $R^4$ and $R^5$ independently stand for a hydrocarbyl group having 1 to 20 carbon atoms, an alkoxy group having 1 to 20 carbon atoms, a halogen atom or a hydrogen atom. $R^8$ stands for an alkylene group having 1 to 4 carbon atoms, which is connected to the two groups $R^3$, and p is 0 or 1. As the cycloalkadienyl group, there can be mentioned, for example, a cyclopentadienyl group, a methylcyclopentadienyl group, a pentamethylcyclopentadienyl group, an indenyl group and a tetrahydroindenyl group. As specific examples of the hydrocarbyl group for $R^4$ and $R^5$, there can be mentioned methyl, ethyl, propyl, butyl, amyl, isoamyl, hexyl, isobutyl, heptyl, octyl, nonyl, decyl, cetyl, 2-ethylhexyl and phenyl groups. As the alkoxy group, there can be mentioned a methoxy group, an ethoxy group, a propoxy group, and a butoxy group. As the halogen atom, there can be mentioned chlorine, bromine, and fluorine.

As specific examples of the compound represented by the general formula $R^8_p (R^3)_2MR^4R^5$, there can be mentioned bis(cyclopentadienyl)dimethyl-titanium, bis(methylcyclopentadienyl)dimethyl-titanium, bis-(pentamethylcyclopentadienyl)dimethyl-titanium, bis(cyclopentadienyl)methylchloro-titanium, bis-(cyclopentadienyl)dichloro-titanium, bis (indenyl)dimethyl-titanium, bis(indenyl)dichlorotitanium, ethylene-bis (indenyl)dichloro-zirconium, ethylene-bis(tetrahydroindenyl)dichloro-zirconium, bis(cyclopentadienyl)-dimethyl-zirconium, bis(cyclopentadienyl)dimethyl-zirconium, bis(methylcyclopentadienyl)dimethyl-zirconium, bis(pentamethylcyclopentadienyl)dimethyl-zirconium, bis(cyclopentadienyl)methylchloro-zirconium, bis(cyclopentadienyl)dichloro-zirconium, bis(indenyl)dimethyl-zirconium, ethylene-bis(indenyl)dichloro-zirconium, ethylene-bis(tetrahydroindenyl)dichloro-zirconium, bis(cyclopentadienyl)dimethyl-hafnium, and bis-(cyclo pentadienyl)dichloro-hafnium.

As the aluminoxane as the component (C), there can be used condensates represented by the following general formula, and mixtures thereof:

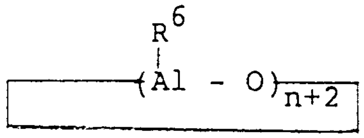

or

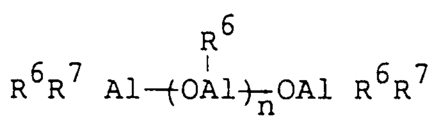

wherein $R^6$ stands for an alkyl group having up to 6 carbon atoms or a halogen atom, $R^7$ stands for an alkyl group having up to 6 carbon atoms, with the proviso that when $R^6$ is an alkyl group, $R^6$ is the same as $R^7$, and n is an integer of 1 or larger.

As the $R^6$, there can be mentioned, for example, a methyl group, an ethyl group, a propyl group and a butyl group. A methyl group and an ethyl group are preferred, and a methyl group is especially preferred.

The aluminoxane can be easily prepared by gradually adding a predetermined amount of water to an organic aluminum compound dissolved in an inert hydrocarbon solvent such as toluene, and heating the mixture to some extent, if necessary. Water of crystallization contained in copper sulfate hydrate or aluminum sulfate hydrate can be utilized.

The catalyst of the present invention can be prepared by bringing the catalyst components (A), (B), and (C) into contact with each other. The order in which these components are brought into contact with each other is not particularly critical. For example, a method can be adopted in which the three components are simultaneously brought into contact with one another, and a method in which the component (A) is first brought into contact with the component (B) and then the resultant mixture is brought into contact with the component (C). The mixing ratio of these three components is such that the amount of the component (B) is 0.01 to 1 millimole, preferably 0.02 to 0.4 millimole, per gram of the component (A), and the amount of aluminum in the component (C) is 1 to $10^5$ gram-atoms, preferably 10 to $10^4$ gram-atoms, per mole of the

component (B).

The polymerization of the present invention can be accomplished by homopolymerizing ethylene or copolymerizing ethylene with an α-olefin by using the so-prepared catalyst. An α-olefin having up to 20 carbon atoms, preferably up to 12 carbon atoms, is used as the α-olefin to be copolymerized with ethylene. As typical examples, there can be mentioned propylene, butene-1, hexane-1, 4-methyl-pentene-1, and octene-1. Preferably the proportion of the α-olefin in the obtained copolymer is generally up to 20 mole%, especially up to 15 mole%.

To carry out the process of the present invention, there can be adopted a liquid phase polymerization process such as a slurry polymerization process or a solution polymerization process, and a gas phase polymerization process. The liquid phase polymerization is generally carried in a hydrocarbon solvent. As the hydrocarbon solvent, there can be used inert hydrocarbons such as butane, isobutane, hexane, octane, decane, cyclohexane, benzene, toluene and xylene, and mixtures of two or more thereof. The polymerization temperature is usually 0 to 300 °C, but from the practical viewpoint, a polymerization temperature of 20 to 200 °C is preferred. If necessary, hydrogen or the like can be made present in the polymerization reaction system, to adjust the molecular weight.

The present invention will now be described in detail with reference to the following examples and comparative examples.

In the examples and following examples, the melt index (hereinafter referred to as "MI") was measured at a temperature of 190 °C under a load of 2.16 kg according to JIS K-6760, and the high-load melt index (hereinafter referred to as "HLMI") was measured at a temperature of 190 °C under a load of 21.6 kg according to JIS K-6760. The larger the value obtained by dividing the HLDI by the MI, that is, HLMI/MI, the broader the molecular weight distribution.

The melt tension was measured under conditions of a resin temperature of 190 °C, an orifice diameter of 2.1 mm, an orifice length of 8 mm, an extrusion speed of 15 mm/min, and a winding speed of 6.5 m/min, using a melt tension tester supplied by Toyo Seiki.

The die swell was measured by using the same apparatus as used for MI determination and was expressed by the swelling degree (%) of the outer diameter of the extrudate obtained upon the measurement of the MI to the orifice diameter (2.1 mm).

Example 1

Preparation of Catalyst Component (A)

A 300-ml three-neck flask was charged with 30 g of silica (Davison 952 supplied by W.R. Grace Co.) dried at 150 °C, 100 ml of n-hexane and 13.2 g of tetraisopropyl titanate were added, and the mixture was stirred at room temperature for 30 minutes. Then n-hexane was removed from the obtained slurry by distillation under a reduced pressure at 40 °C.

The obtained powder was charged in a cylindrical electrical calcination furnace having a diameter of 38 mm, provided with a perforated plate, and the temperature was elevated at a rate of 90 °C/hr by using nitrogen gas fed at a flow rate corresponding to a linear speed of 4 cm/sec. When the temperature reached 600 °C, the nitrogen was replaced with air, and calcination was carried out at this temperature for 8 hours while supplying air at the same linear speed. Then the atmosphere was replaced with nitrogen and the temperature was lowered to room temperature, and as a result, 20 g of a carrier was obtained. By the elementary analysis of the carrier, it was found that it contained 5.5% by weight of titanium atom.

Preparation of Catalyst Component (C)

A 300-ml three-neck flask, the inner atmosphere of which was replaced by nitrogen, was charged with 100 millimoles of copper sulfate pentahydrate, and the copper sulfate pentahydrate was suspended in 100 ml of toluene. Then, 300 millimoles of trimethyl aluminum was added to the suspension at 30 °C and reaction was continued at this temperature for 48 hours. The reaction mixture was filtered to obtain a solution of the reaction product. Distillation of toluene gave 8.2 g of methylaluminoxane in the form of a white crystal.

Polymerization of Ethylene

A 3-liter autoclave, the inner atmosphere of which was replaced by nitrogen, was charged with 2 ℓ of isobutane, 0.2 g of the carrier obtained above 2.0 millimoles of a solution of methylaluminoxane in toluene

and 0.01 millimole of a solution of biscyclopentadienyldichloro-zirconium in toluene, and the inner temperature was elevated to 90 °C. Then hydrogen was supplied under a gauge pressure of 2 kg/cm$^2$, and ethylene was fed under pressure. Polymerization was carried out for 1 hour while maintaining the partial pressure of ethylene at 10 kg/cm$^2$, and the polymerization was stopped by expelling the gas in the autoclave to the outside.

As a result, 186 g of a white powdery polymer was obtained. The MI of this polymer was 0.54 (g/10 min), the HLMI was 74 (g/10 min) and the HLMI/MI was 137, and it was confirmed that the molecular weight distribution was broad. The melt tension was 35 g and the die swell was 85%.

Comparative Example 1

Polymerization of ethylene was carried out in the same manner as described in Example 1 except that a carrier formed by calcining silica (Davison 952) at 600 °C was used instead of the titanium-supported silica used in Example 1 and the hydrogen pressure was changed to 0.2 kg/cm$^2$. As a result, 148 g of a polymer was obtained, and the polymer was characterized by MI of 0.82 (g/10 min) and HLMI/MI of 20.4. The melt tension was 2.5 g and the die swell was 20%.

Examples 2 through 4

The catalyst component (A) was prepared in the same manner as described in Example 1 except that the amount used of tetraisopropyl titanate was changed as shown in Table 1, and polymerization of ethylene was carried out in the same manner as described in Example 1. The results are shown in Table 1.

Examples 5 through 8

The catalyst component (A) was prepared in the same manner as described in Example 1 except that a titanium compound shown in Table 1 was used instead of tetraisopropyl titanate as the titanium compound, and polymerization of ethylene was carried out in the same manner as described in Example 1. The results are shown in Table 1.

Table 1

| Example No. | Titanium compound | | Ethylene polymer | | | | | |
|---|---|---|---|---|---|---|---|---|
| | | Amount* (g) | Yield (g) | MI (g/10 min) | HLMI (g/10 min) | HLMI/MI | Melt tension (g) | Die swell (%) |
| 1 | Tetraisopropyl titanate | 13.2 | 186 | 0.54 | 74 | 137 | 35 | 85 |
| 2 | Ditto | 16.5 | 161 | 0.38 | 36 | 95 | 48 | 96 |
| 3 | Ditto | 6.6 | 192 | 0.72 | 73 | 101 | 20 | 76 |
| 4 | Ditto | 3.3 | 211 | 0.95 | 68 | 72 | 15 | 62 |
| 5 | Tetrabutoxy titanate | 13.2 | 173 | 0.68 | 82 | 120 | 30 | 102 |
| 6 | Dibutoxytitanium dichloride | 13.2 | 151 | 2.64 | 256 | 97 | 12 | 68 |
| 7 | Dibutoxytitanium tetramer | 13.2 | 164 | 1.03 | 114 | 111 | 18 | 77 |
| 8 | Titanium tetrachloride | 13.2 | 135 | 3.76 | 256 | 68 | 8 | 60 |

* Note: Amount used per 30 g of $SiO_2$

Examples 9 through 13

Polymerization of ethylene was carried out in the same manner as in Example 3 except that a compound shown in Table 2 was used as the transition compound instead of biscyclopentadienyldichloro-zirconium used in Example 3. The results are shown in Table 2.

Table 2

| Example No. | Transition metal compound | Ethylene polymer | | | | | |
|---|---|---|---|---|---|---|---|
| | | Yield (g) | MI (g/10 min) | HLMI (g/10 min) | HLMI/MI | Melt tension (g) | Die swell (%) |
| 9 | Biscyclopentadienyldimethyl-zirconium | 203 | 1.06 | 124 | 117 | 22 | 75 |
| 10 | Bisindenyldichloro-zirconium | 141 | 0.98 | 91 | 93 | 19 | 66 |
| 11 | Bismethylcyclopentadienyldi-chloro-zirconium | 191 | 0.62 | 67 | 108 | 28 | 86 |
| 12 | Biscyclopentadienyldichloro-titanium | 123 | 2.02 | 149 | 74 | 14 | 69 |
| 13 | Ethylene-bis(indenyl)dichloro-zirconium | 225 | 1.52 | 152 | 100 | 18 | 72 |

Example 14

Copolymerization of Ethylene with Butene-1

A 3-liter autoclave, the inside atmosphere of which was replaced by nitrogen, was charged with 2 ℓ of isobutane, 0.2 g of the catalyst component (A) prepared in Example 3, 2.0 millimoles of a solution of methylaluminoxane in toluene and 0.01 millimole of a solution of biscyclopentadienyldichloro-zirconium in toluene, and the inner temperature was elevated to 75 °C. Then 80 g of butene-1 was charged, hydrogen was charged under 0.3 kg/cm$^2$, and ethylene was fed under pressure, and polymerization was carried out for 1 hour while maintaining the partial pressure of the ethylene at 10 kg/cm$^2$. As a result, 225 g of a white polymer was obtained. The obtained polymer was characterized by an MI of 0.75 (g/10 min), an HLMI of 42 g/min, and an HLMI/MI of 56, a density of 0.925 (g/ml), a melt tension of 18 g, and a die swell of 58%.

Example 15

A 300-ml three-neck flask, the inside atmosphere of which was replaced by nitrogen, was charged with 1 g of the catalyst component (A) prepared in Example 1, 20 ml of toluene, and 10 millimoles of a solution of methylaluminoxane in toluene, and the mixture was stirred at room temperature for 1 hour. Then 0.05 millimole of biscyclopentadienyldichloro-zirconium was charged, stirring was conducted for 1 hour, and the toluene was removed by distillation under a reduced pressure to obtain a solid catalyst component.

Copolymerization of Ethylene with Butene-1

A 3-liter autoclave, the inside atmosphere of which was replaced by nitrogen, was charged with 2 ℓ of isobutene and 0.3 g of the solid catalyst component obtained above, and the inner temperature was elevated to 75 °C. Then 65 g of butene-1 was charged and hydrogen was supplied under 0.4 kg/cm$^2$, ethylene was fed under pressure, and polymerization was carried out for 1 hour while maintaining the partial pressure of the ethylene at 10 kg/cm$^2$. As a result, 198 g of a polymer was obtained. The polymer was characterized by an MI of 1.1 (g/10 min), an HLMI of 69.5 (g/10 min), an HLMI/MI of 63.2 and a density of 0.936 (g/ml). The melt tension was 21 g and the die swell was 67%.

Example 16

Preparation of Catalyst Component (A)

A 300-ml three-neck flask was charged with 30 g of silica (Davison 952 supplied by W.R. Grace Co.) dried at 150 °C, and 0.7 g chromium trioxide dissolved in 300 ml of distilled water was added, the mixture was stirred at room temperature for 30 minutes. Then, water was removed from the obtained slurry by distillation under a reduced pressure at 40 °C.

The obtained powder was charged in a cylindrical electric calcination furnace having a diameter of 38 mm, provided with a perforated plate, and the temperature was elevated at a rate of 90 °C/hr by using nitrogen gas fed at a flow rate corresponding to a linear speed of 4 cm/sec. When the temperature reached 600 °C, the nitrogen was replaced with air, and calcination was carried out at this temperature for 8 hours while supplying air at the same linear speed. Then the atmosphere was replaced with nitrogen and the temperature was lowered to room temperature, and as a result, 20 g of a carrier was obtained. By the elementary analysis of the carrier, it was found that it contained 1.1% by weight of chromium atom.

Polymerization of Ethylene

A 3-liter autoclave, the inner atmosphere of which was replaced by nitrogen, was charged with 2 ℓ of isobutane, 0.2 g of the carrier obtained above, 2.0 millimoles of a solution of methylaluminoxane in toluene prepared in the same manner as in Example 1 and 0.01 millimole of a solution of biscyclopentadienyldichloro-zirconium in toluene, the inner temperature was elevated to 90 °C, and then, hydrogen was supplied under a gauge pressure of 1.5 kg/cm$^2$ and ethylene was fed under pressure. Polymerization was carried out for 1 hour while maintaining the partial pressure of ethylene at 10 kg/cm$^2$, and the polymerization was stopped by expelling the gas in the autoclave to the outside. As a result, 203 g of a white powdery polymer was obtained. The MI of this polymer was 0.94 (g/10 min), the HLMI was 133 (g/10 min) and the HLMI/MI was 142, and it was confirmed that the molecular weight distribution was broad. The melt tension was 13 g

and the die swell was 78%.

Examples 17 through 19

The catalyst component (A) was prepared in the same manner as described in Example 16 except that the amount of chromium trioxide used was changed as shown in Table 3, and polymerization of ethylene was carried out in the same manner as described in Example 16. The results are shown in Table 3.

Examples 20 through 23

The catalyst component (A) was prepared in the same manner as described in Example 16 except that a chromium compound shown in Table 3 was used instead of chromium trioxide as the chromium compound, and polymerization of ethylene was carried out in the same manner as described in Example 16. The results are shown in Table 3.

Table 3

| Example No. | Chromium compound | (g) | Ethylene polymer Yield (g) | MI (g/10 min) | HLMI (g/10 min) | HLMI/MI | Melt tension (g) | Die swell (%) |
|---|---|---|---|---|---|---|---|---|
| 16 | Chromium trioxide | 0.7 | 203 | 0.94 | 133 | 142 | 13 | 78 |
| 17 | Ditto | 2.5 | 241 | 0.52 | 79 | 152 | 17 | 96 |
| 18 | Ditto | 1.5 | 222 | 0.85 | 115 | 135 | 15 | 76 |
| 19 | Ditto | 0.2 | 193 | 1.54 | 136 | 88 | 9 | 62 |
| 20 | Chromyl chloride | 1.1 | 186 | 1.11 | 167 | 150 | 11 | 85 |
| 21 | Chromium acetate hydrate | 1.7 | 170 | 1.88 | 275 | 146 | 8 | 72 |
| 22 | Chromium nitrate nonahydrate | 2.7 | 198 | 2.12 | 269 | 127 | 6 | 69 |
| 23 | Chromium acetylacetonate* | 2.4 | 167 | 2.82 | 276 | 98 | 5 | 58 |

* Note: Benzene was used as solvent.

Examples 24 through 27

Polymerization of ethylene was carried out in the same manner as in Example 18 except that a compound shown in Table 4 was used as the transition compound instead of biscyclopentadienyldichloro-zirconium used in Example 18. The results are shown in Table 4.

Table 4

| Example No. | Transition metal compound | Ethylene polymer | | | | | |
|---|---|---|---|---|---|---|---|
| | | Yield (g) | MI (g/10 min) | HLMI (g/10 min) | HLMI/MI | Melt tension (g) | Die swell (%) |
| 24 | Biscyclopentadienyldimethyl-zirconium | 195 | 1.23 | 169 | 137 | 10 | 77 |
| 25 | Bisindenyldichloro-zirconium | 167 | 1.02 | 102 | 100 | 12 | 81 |
| 26 | Ethylene-bis(indenyl)dichloro-zirconium | 211 | 0.75 | 89 | 119 | 16 | 76 |
| 27 | Biscyclopentadienyldichloro-titanium | 153 | 1.93 | 176 | 91 | 8 | 65 |

Example 28

Copolymerization of Ethylene with Butene-1

A 3-liter autoclave, the inside atmosphere of which was replaced by nitrogen, was charged with 2 ℓ of isobutane, 0.2 g of the catalyst component (A) prepared in Example 18, 2.0 millimoles of a solution of methylaluminoxane in toluene and 0.01 millimole of a solution of biscyclopentadienyldichloro-zirconium in toluene, the inner temperature was elevated to 75 °C, 80 g of butene-1 was charged and hydrogen was charged under 0.3 kg/cm$^2$, ethylene was fed under pressure, and polymerization was carried out for 1 hour while maintaining the partial pressure of ethylene at 10 kg/cm$^2$. As a result, 252 g of a white polymer was obtained. The obtained polymer was characterized by an MI of 0.58 (g/10 min), an HLMI of 37 g/min, an HLMI/MI of 64, a density of 0.928 (g/ml), a melt tension of 15 g, and a die swell of 65%.

Example 29

A 300-ml three-neck flask, the inside atmosphere of which was replaced by nitrogen, was charged with 1 g of the catalyst component (A) prepared in Example 16, 20 ml of toluene and 10 millimoles of a solution of methylaluminoxane in toluene, and the mixture was stirred at room temperature for 1 hour, and then, 0.05 millimole of biscyclopentadienyldichloro-zirconium was charged, stirring was conducted for 1 hour, and toluene was removed by distillation under a reduced pressure to obtain a solid catalyst component.

Copolymerization of Ethylene with Butene-1

A 3-liter autoclave, the inside atmosphere of which was replaced by nitrogen, was charged with 2 ℓ of isobutane and 0.25 g of the solid catalyst component obtained above, and the inner temperature was elevated to 75 °C, 65 g of butene-1 was charged and hydrogen was supplied under 0.4 kg/cm$^2$, and then, ethylene was fed under pressure and polymerization was carried out for 1 hour while maintaining the partial pressure of ethylene at 10 kg/cm$^2$. As a result, 235 g of a polymer was obtained. The polymer was characterized by an MI of 2.3 (g/10 min), an HLMI of 166 (g/10 min), an HLMI/MI of 72, and a density of 0.939 (g/ml). The melt tension was 5 g and the die swell was 77%.

As apparent from the above, according to the process of the present invention, an ethylene polymer having a broad molecular weight distribution, a high melt tension and a large die swell can be prepared at a high efficiency, and accordingly, an ethylene polymer having a high quality, suitable for the formation of a film or the blow molding, can be obtained.

## Claims

**1.** A process for the preparation of ethylene polymers, which comprises homopolymerizing ethylene or copolymerizing ethylene with an α-olefin having up to 20 carbon atoms in the presence of a catalyst comprising (A) a titanium- or chromium-containing porous inorganic oxide carrier obtained by heating a porous inorganic oxide, on which at least one compound selected from the group consisting of a titanium compound and a chromium compound is supported, at a temperature of 300 to 1,000 °C, (B) a transition metal compound containing a group having a conjugated π-electron system as a ligand, and (C) an aluminoxane.

**2.** A process according to claim 1, wherein the titanium compound is selected from the group consisting of:

(a) titanium trichloride;

(b) a compound represented by the following general formula:

$$Ti(OR^1)_\ell X_{4-\ell}$$

wherein $R^1$ stands for an aliphatic, alicyclic or aromatic hydrocarbon group having up to 8 carbon atoms, X stands for a halogen atom, and $\ell$ is a number of $0 \leqq \ell \leqq 4$,

(c) a polytitanate represented by the following general formula:

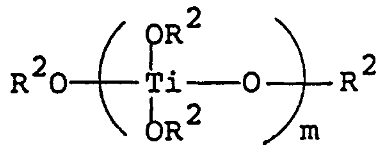

wherein $R^2$ stands for an aliphatic, alicyclic or aromatic hydrocarbon group having up to 8 carbon atoms, and m is an integer of from 2 to 10; and

(d) a compound obtained by treating said compound (b) or (c) with an electron donor compound.

**3.** A process according to claim 1 or 2, wherein the chromium compound is selected from the group consisting of oxides, halides, oxyhalides, nitrates, sulfates, acetates and oxalates of chromium and organic chromium compounds.

**4.** A process according to any of the claims 1 to 3, wherein the porous inorganic oxide is selected from the group consisting of oxides of metals of the groups IIa, IIIa, IVa and IVb of the Periodic Table, and the porous inorganic oxide has a specific surface area of at least 50 $m^2/g$, an average pore size of at least 5 nm and an average particle size smaller than 100 $\mu m$.

**5.** A process according to claim 4, wherein the porous inorganic oxide is selected from the group consisting of silica, alumina, magnesia, zirconia and mixtures thereof.

**6.** A process according to any of the claims 1 to 5, wherein the amount of the compound selected from the group consisting of the titanium compound and the chromium compound is such that the content of the titanium atom and chromium atom in the carrier is 0.2 to 10 % by weight based on the weight of the carrier.

**7.** A process according to any of the claims 1 to 6, wherein the titanium compound is supported on the porous inorganic oxide in an amount such that the content of the titanium atom in the carrier is 0.5 to 10 % by weight based on the weight of the carrier.

**8.** A process according to any of the claims 1 to 7, wherein the chromium compound is supported on the porous oxide in an amount such that the content of the chromium atom in the carrier is 0.2 to 5 % by weight based on the weight of the carrier.

**9.** A process according to any of the claims 1 to 8, wherein the transition metal compound containing a group having a conjugated $\pi$-electron system is a compound represented by the following general formula:

$$R^8_p\,(R^3)_2MR^4R^5$$

wherein M stands for titanium, zirconium or hafnium, $R^3$ stands for a cycloalkadienyl group, $R^4$ and $R^5$ independently stand for a hydrocarbyl group having 1 to 20 carbon atoms, an alkoxy group having from 1 to 20 carbon atoms, a halogen atom or a hydrogen atom, $R^8$ stands for an alkylene group having 1 to 4 carbon atoms, which is connected to the two groups $R^3$, and p is 0 or 1.

**10.** A process according to any of the claims 1 to 9, wherein the aluminoxane is selected from the group consisting of condensates represented by the following general formula and mixtures thereof:

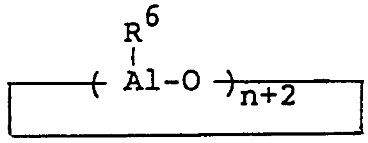

or

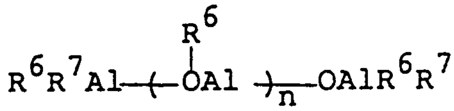

wherein $R^6$ stands for an alkyl group having 1 to 6 carbon atoms or a halogen atom, $R^7$ stands for an alkyl group having 1 to 6 carbon atoms, with the proviso that when $R^6$ is an alkyl group, $R^6$ is the same as $R^7$, and n is an integer of 1 or larger.

**11.** A process according to any of the claims 1 to 10, wherein the amount of the catalyst component (B) is 0.01 to 1 millimole per gram of the catalyst component (A), and the amount of aluminum in the catalyst component (C) is 1 to $10^5$ gram-atoms per mole of the catalyst component (B).

**Patentansprüche**

**1.** Verfahren zur Herstellung von Ethylenpolymeren, umfassend die Homopolymerisation von Ethylen oder die Copolymerisation von Ethylen mit einem $\alpha$-Olefin, das bis zu 20 Kohlenstoffatome aufweist, in Gegenwart eines Katalysators, der (A) einen Titan oder Chrom enthaltenden, porösen Träger aus einem anorganischen Oxid, der durch Erhitzen eines porösen, anorganischen Oxids, auf das mindestens eine Verbindung aufgetragen ist, die ausgewählt ist aus der aus einer Titanverbindung und einer Chromverbindung bestehenden Gruppe, auf eine Temperatur von 300 bis 1000 °C erhalten wird, (B) eine Übergangsmetallverbindung, die als Liganden eine Gruppe aufweist, die ein konjugiertes $\pi$-Elektronensystem hat, und (C) ein Aluminoxan enthält.

**2.** Verfahren gemäß Anspruch 1, bei dem die Titanverbindung aus der folgenden Gruppe ausgewählt ist:
(a) Titantrichlorid;
(b) eine durch die folgende allgemeine Formel dargestellte Verbindung:

$Ti(OR^1)_l X_{4-l}$

in der $R^1$ für eine aliphatische, alicyclische oder aromatische Kohlenwasserstoffgruppe mit bis zu 8 Kohlenstoffatomen steht, X für ein Halogenatom steht und l eine Zahl entsprechend $0 \leqq l \leqq 4$ bedeutet,
(c) ein Polytitanat, dargestellt durch die nachstehende allgemeine Formel:

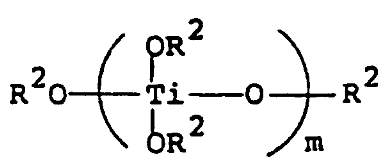

worin $R^2$ für eine aliphatische, alicyclische oder aromatische Kohlenwasserstoffgruppe mit bis zu 8 Kohlenstoffatomen steht und m eine ganze Zahl von 2 bis 10 ist, und
(d) eine durch Behandlung der Verbindung (b) oder (c) mit einer Elektronendonorverbindung erhaltene Verbindung.

**3.** Verfahren gemäß Anspruch 1 oder 2, bei dem die Chromverbindung aus der aus Oxiden, Halogeniden, Oxyhalogeniden, Nitraten, Sulfaten, Acetaten und Oxalaten von Chrom und organischen Chromverbindungen bestehenden Gruppe ausgewählt ist.

**4.** Verfahren gemäß einem der Ansprüche 1 bis 3, bei dem das poröse, anorganische Oxid aus der aus Oxiden von Metallen der Gruppen IIa, IIIa, IVa und IVb des Periodensystems bestehenden Gruppe

ausgewählt ist und das poröse, anorganische Oxid eine spezifische Oberfläche von mindestens 50 $m^2/g$, eine durchschnittliche Porengröße von mindestens 5 nm und eine durchschnittliche Teilchengröße von weniger als 100 $\mu m$ hat.

**5.** Verfahren gemäß Anspruch 4, bei dem das poröse, anorganische Oxid aus der aus Siliciumdioxid, Aluminiumoxid, Magnesiumoxid, Zirconiumoxid und Gemischen dieser bestehenden Gruppe ausgewählt ist.

**6.** Verfahren gemäß einem der Ansprüche 1 bis 5, bei dem die Menge der unter Titanverbindungen und Chromverbindungen ausgewählten Verbindung derart ist, daß der Gehalt an Titanatomen und Chromatomen in dem Träger 0,2 bis 10 Gew.-%, bezogen auf das Gewicht des Trägers, beträgt.

**7.** Verfahren gemäß einem der Ansprüche 1 bis 6, bei dem die Titanverbindung in einer solchen Menge auf das poröse, anorganische Oxid aufgetragen ist, daß der Gehalt an Titanatomen in dem Träger 0,5 bis 10 Gew.-%, bezogen auf das Gewicht des Trägers, beträgt.

**8.** Verfahren gemäß einem der Ansprüche 1 bis 7, bei dem die Chromverbindung in einer solchen Menge auf dem porösen Oxid aufgetragen ist, daß der Gehalt an Chromatomen in dem Träger 0,2 bis 5 Gew.-%, bezogen auf das Gewicht des Trägers, beträgt.

**9.** Verfahren gemäß einem der Ansprüche 1 bis 8, bei dem die Übergangsmetallverbindung, die eine Gruppe mit einem konjugierten $\pi$-Elektronensystem enthält, eine durch die folgende allgemeine Formel dargestellte Verbindung ist:

$$R^8_p\,(R^3)_2MR^4R^5$$

worin M für Titan, Zirconium oder Hafnium steht, $R^3$ für eine Cycloalkadienylgruppe steht, $R^4$ und $R^5$ unabhängig voneinander für eine Kohlenwasserstoffgruppe mit 1 bis 20 Kohlenstoffatomen, eine Alkoxygruppe mit 1 bis 20 Kohlenstoffatomen, ein Halogenatom oder ein Wasserstoffatom stehen, $R^8$ für eine Alkylengruppe mit 1 bis 4 Kohlenstoffatomen steht, die mit den beiden Gruppen $R^3$ verknüpft ist, und p 0 oder 1 bedeutet.

**10.** Verfahren gemäß einem der Ansprüche 1 bis 9, bei dem das Aluminoxan aus der Gruppe der Kondensationsverbindungen, die durch die folgende allgemeine Formel

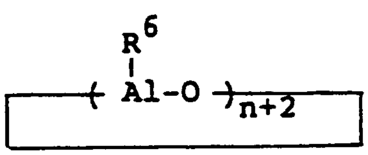

oder

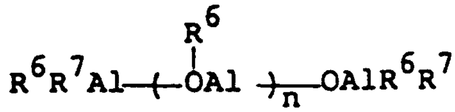

dargestellt sind, und Gemischen dieser ausgewählt ist, worin $R^6$ für eine Alkylgruppe mit 1 bis 6 Kohlenstoffatomen oder ein Halogenatom steht, $R^7$ für eine Alkylgruppe mit 1 bis 6 Kohlenstoffatomen steht mit der Maßgabe, daß dann, wenn $R^6$ eine Alkylgruppe ist, $R^6$ das gleiche wie $R^7$ ist, und n eine ganze Zahl von 1 oder mehr ist.

**11.** Verfahren gemäß einem der Ansprüche 1 bis 10, bei dem die Menge der Katalysatorkomponente (B) 0,01 bis 1 Millimol pro Gramm der Katalysatorkomponente (A) beträgt und die Menge an Aluminium in der Katalysatorkomponente (C) 1 bis $10^5$ Gramm-Atome pro Mol der Katalysatorkomponente (B) beträgt.

**Revendications**

1. Procédé de préparation de polymères éthyléniques, comprenant l'homopolymérisation de l'éthylène ou la copolymérisation de l'éthylène avec une $\alpha$-oléfine ayant jusqu'à 20 atomes de carbone, en présence d'un catalyseur constitué par (A) un support d'oxyde inorganique poreux contenant du titane ou du chrome, qu'on obtient en chauffant un oxyde inorganique poreux portant au moins un composé choisi dans l'ensemble constitué par un composé du titane et un composé du chrome, à une température située entre 300 et 1 000 ° C, (B) un composé d'un métal de transition contenant un groupe ayant un système d'électrons $\pi$ conjugués, comme ligand, et (C) un aluminoxane.

2. Procédé selon la revendication 1, dans lequel le composé du titane est choisi dans l'ensemble constitué par:
   (a) le trichlorure de titane ;
   (b) un composé représenté par la formule générale suivante :

   $Ti(OR^1)_\ell X_{4-\ell}$

   où $R^1$ représente un groupe hydrocarboné aliphatique, alicyclique ou aromatique ayant jusqu'à 8 atomes de carbone, X représente un atome d'halogène, et $\ell$ est un nombre valant $0 \leq \ell \leq 4$,
   (c) un polytitanate représenté par la formule générale suivante :

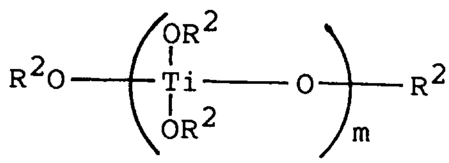

   où $R^2$ représente un groupe hydrocarboné aliphatique, alicyclique ou aromatique ayant jusqu'à 8 atomes de carbone, et m est un nombre entier valant de 2 à 10 ; et
   (d) un composé qu'on obtient en traitant ledit composé (b) ou (c) avec un composé donneur d'électrons.

3. Procédé selon la revendication 1 ou 2, dans lequel le composé du chrome est choisi dans l'ensemble constitué par des oxydes, des halogénures, des oxyhalogénures, des nitrates, des sulfates, des acétates et des oxalates du chrome, et des composés organiques du chrome.

4. Procédé selon l'une quelconque des revendications 1 à 3, dans lequel l'oxyde inorganique poreux est choisi dans l'ensemble constitué par des oxydes des métaux des groupes IIa, IIIa, IVa et IVb du tableau périodique, et l'oxyde inorganique poreux a une surface spécifique d'au moins 50 $m^2/g$, une dimension moyenne de pores d'au moins 5 nm, et une dimension moyenne de particules de moins de 100 $\mu m$.

5. Procédé selon la revendication 4, dans lequel l'oxyde inorganique poreux est choisi dans l'ensemble constitué par la silice, l'oxyde d'aluminium, l'oxyde de magnésium, l'oxyde de zirconium, et leurs mélanges.

6. Procédé selon l'une quelconque des revendications 1 à 5, dans lequel la quantité du composé choisi dans l'ensemble constitué par le composé du titane et le composé du chrome est telle que la teneur en atomes de titane et en atomes de chrome dans le support est de 0,2 à 10 % en poids par rapport au poids du support.

7. Procédé selon l'une quelconque des revendications 1 à 6, dans lequel le composé du titane est supporté sur l'oxyde inorganique poreux en une quantité telle que la teneur en atomes de titane dans le support est de 0,5 à 10 % en poids par rapport au poids du support.

8. Procédé selon l'une quelconque des revendications 1 à 7, dans lequel le composé du chrome est supporté sur l'oxyde poreux en une quantité telle que la teneur en atomes de chrome dans le support est de 0,2 à 5 % en poids par rapport au poids du support.

**9.** Procédé selon l'une quelconque des revendications 1 à 8, dans lequel le composé de métal de transition contenant un système d'électrons $\pi$ conjugués est un composé représenté par la formule générale suivante :

$R^8{}_p(R^3)_2MR^4R^5$

où M représente le titane, le zirconium ou l'hafnium, $R^3$ représente un groupe cycloalcadiényle, $R^4$ et $R^5$ représentent, indépendamment l'un de l'autre, un groupe hydrocarbyle ayant de 1 à 20 atomes de carbone, un groupe alcoxy ayant de 1 à 20 atomes de carbone, ou un atome d'hydrogène, $R^8$ représente un groupe alkylène ayant de 1 à 4 atomes de carbone, qui est relié aux deux groupes $R^3$, et p vaut 0 ou 1.

**10.** Procédé selon l'une quelconque des revendications 1 à 9, dans lequel l'aluminoxane est choisi dans l'ensemble constitué par des condensats représentés par la formule générale suivante, ou leurs mélanges :

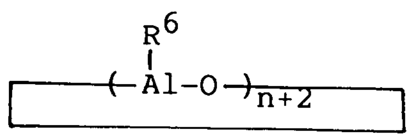

ou

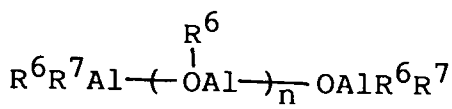

où $R^6$ représente un groupe alkyle ayant de 1 à 6 atomes de carbone, ou un atome d'halogène, $R^7$ représente un groupe alkyle ayant de 1 à 6 atomes de carbone, à la condition que $R^6$ soit identique à $R^7$ quand $R^6$ est un groupe alkyle, et n est un nombre entier valant 1 ou plus.

**11.** Procédé selon l'une quelconque des revendications 1 à 10, dans lequel la quantité du composant catalyseur (B) est de 0,01 à 1 millimole par gramme de composant catalyseur (A), et la quantité d'aluminium dans le composant catalyseur (C) est de 1 à $10^5$ atomes-grammes par mole de composant catalyseur (B).